# FASCICULE DE BREVET EUROPEEN

(11) **EP 4 061 713 B1**
(45) Date de publication et mention de la délivrance du brevet: **18.10.2023**
(21) Numéro de dépôt: 20821338.9
(22) Date de dépôt: 18.11.2020
(51) Int. Cl.: B64D 11/06

(54) **SIÈGE D'AÉRONEF**
FLUGZEUGSITZ
AIRCRAFT SEAT

(30) Priorité: 22.11.2019 FR 1913133
(43) Date de publication de la demande: 28.09.2022
(73) Titulaire: Safran Electronics & Defence Actuation, 89002 Auxerre Cédex (FR)
(72) Inventeur: AUBRUN, Julien, 95000 CERGY (FR); DELONG, Joffrey, 75020 PARIS (FR); PIRIS, Miguel, 77610 LA HOUSSAYE EN BRIE (FR); GUEROULT, Olivier, 95100 ARGENTEUIL (FR); BERDAH, Emmanuel, 93300 AUBERVILLERS (FR); BOUET, Loic, 78490 MONTFORT L'AMAURY (FR)
(74) Mandataire: Plasseraud IP
(86) Numéro de dépôt international: PCT/FR2020/052116
(87) Numéro de publication internationale: WO 2021/099737

(56) Documents cités:
- EP-A1- 2 765 322
- WO-A2-2015/104378
- US-A- 5 002 172

## Description

### Domaine technique de l'invention

La présente divulgation relève du domaine des sièges pour aéronef.

### Etat de la technique antérieure

Dans un aéronef, les sièges peuvent être déplacés par rapport au sol par des systèmes d'entrainement. Ces systèmes d'entrainement comportent un actionneur et une chaine de transmission. Les pièces mécaniques de ces systèmes d'entrainement doivent être capable de supporter des charges correspondants à une situation d'arrêt brutal (généralement appelé « crash » en anglais) sans que les pièces mécaniques ne se rompent et puissent blesser un passager. Au cours d'une situation d'arrêt brutal, le siège doit ainsi résister à des poussées de 9 à 16 g. Ces pièces mécaniques doivent également être capables de supporter des charges brusques, importantes et répétées subies, par exemple, lorsque l'aéronef reprend de la portance après avoir traversé un trou d'air ou lorsqu'une personne obèse se laisse tomber violement sur le siège. Face à ces situations, les pièces mécaniques de la chaine de transmission ne doivent ni se casser ni s'user prématurément pour limiter le nombre d'arrêts au sol à des fins de maintenance.

Pour atteindre cet objectif, les pièces mécaniques des systèmes d'entrainement d'aéronef, sont surdimensionnées. Toutefois, ce surdimensionnement augmente à la fois le coût de fabrication des pièces mécaniques et le poids de l'aéronef. Or, il est souhaitable de réduire le poids de l'aéronef afin de diminuer la quantité de kérosène nécessaire pour effectuer un trajet donné, et, ainsi limiter le coût du transport aérien et préserver l'environnement.

Il est également connu par exemple par le document WO 2015/104378 d'insérer un mécanisme de verrouillage et de déverrouillage de la chaine cinématique d'entrainement d'un élément de siège.

### Présentation de l'invention

L'invention vient améliorer la situation.

### Résumé de l'invention

L'invention concerne un siège d'aéronef comprenant au moins un actionneur apte à générer un mouvement et au moins un dispositif de transmission du mouvement comportant :
- un bâti pourvu d'un alésage traversant s'étendant selon une direction axiale, ledit bâti comprenant au moins une face d'appui et au moins une face de freinage,
- un corps d'entrainement propre à être entrainé en rotation par rapport au bâti autour d'un axe s'étendant selon une direction axiale; ledit corps d'entrainement étant agencé dans l'alésage, libre en translation selon au moins la direction axiale par rapport au bâti, ledit corps d'entrainement comprenant au moins une face d'appui s'étendant au droit de la face d'appui du bâti et au moins une face de freinage s'étendant au droit d'au moins une partie de la face de freinage du bâti,
- au moins un élément élastique agencé entre ladite au moins une face d'appui du bâti et ladite au moins une face d'appui du corps d'entrainement pour maintenir ladite au moins une face de freinage du corps d'entrainement à une distance définie de ladite au moins une face de freinage du bâti, ledit au moins un élément élastique ayant une raideur déterminée et étant précontraint de sorte que, lorsqu'une charge axiale supérieure à une charge seuil est appliquée au corps d'entrainement, ledit élément élastique se comprime et ladite au moins une face de freinage du corps d'entrainement vient en contact de ladite au moins une face de freinage du bâti.

Le siège d'aéronef selon l'invention comporte un dispositif de transmission qui permet de contrer un effort excessivement important afin que l'actionneur et les pièces mécaniques du système de transmission n'aient pas besoin d'endurer cet effort. Cette reprise d'effort s'effectue au travers d'une voie de fonctionnement dédiée et permet ne pas avoir à surdimensionner la voie de fonctionnement normal.

Avantageusement, le dispositif de transmission est un système purement mécanique qui n'a pas besoin d'apport énergétique externe. Il n'a pas besoin d'un système de contrôle et d'exécution pour fonctionner. Le dispositif de transmission est inséré dans un système de transmission rotatif quelconque et n'entrave pas son fonctionnement. De par sa fonction d'asservissement en verrouillage ainsi que son adaptabilité, le dispositif de transmission du siège d'aéronef permet un dimensionnement de l'actionneur et des pièces mécaniques du système de transmission et in fine un gain de masse et /ou un abaissement des exigences technique de la fonction principale de transmission.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- L'élément élastique comporte au moins une rondelle ressort ;
- L'élément élastique comporte deux rondelles de Belleville montées en opposition ;
- Le dispositif de transmission comporte au moins un roulement agencé entre la face d'appui du bâti et ledit au moins un élément élastique ;
- Le corps d'entrainement comporte un écrou vis à billes, une vis à billes propre à être entrainée en translation par l'écrou vis à billes, une enveloppe cylindrique s'étendant dans le prolongement de l'écrou vis à billes, ladite enveloppe cylindrique comportant une première extrémité solidaire de l'écrou vis à billes et une deuxième extrémité libre, et une paroi radiale solidaire d'au moins une extrémité de l'enveloppe cylindrique, ladite au moins une face de freinage, et ladite au moins une face d'appui du corps d'entrainement étant disposées sur ladite paroi radiale ;
- Le siège comporte un écrou de fermeture propre à être solidarisé à la deuxième extrémité de l'enveloppe cylindrique ; l'écrou de fermeture étant propre à pré-contraindre ledit au moins un élément élastique ;
- La face de freinage et la face d'appui du corps d'entrainement sont disposée sur une face radiale dudit écrou de fermeture ;
- L'enveloppe cylindrique comporte une couronne s'étendant axialement à partir de l'extrémité de la paroi radiale, ladite couronne étant propre à être fixée à l'écrou vis à billes ;
- Le bâti comprend au moins un épaulement interne contenu dans un premier plan radial et au moins un épaulement périphérique disposé autour dudit au moins un épaulement interne et contenu dans un second plan radial ; ledit second plan radial étant décalé axialement par rapport au premier plan radial, et dans lequel ladite au moins une face d'appui du bâti est formé par ledit au moins un épaulement interne et ladite au moins une face de freinage du bâti est formé par ledit au moins un épaulement périphérique.
- Le dispositif de transmission comporte un anneau de support agencé autour de l'enveloppe cylindrique, l'anneau de support formant la paroi radiale, la face d'appui du corps d'entrainement étant une face radiale dudit anneau de support.
- L'anneau de support est muni d'un rebord périphérique s'étendant axialement, la face d'extrémité du rebord périphérique forme la face de freinage du corps d'entrainement.
- Le bâti comporte une face d'appui s'étendant radialement et dans lequel dispositif de transmission comporte un roulement et une rondelle d'appui agencés dans l'alésage autour du corps d'entrainement; le roulement ayant une bague interne et une bague externe ; la bague externe du roulement étant en appui contre la face d'appui du bâti, la rondelle d'appui étant en appui contre la bague interne du roulement.
- Le dispositif de transmission comporte en outre une bague de freinage pourvue d'une jupe s'étendant radialement vers l'intérieur, une face radiale de ladite jupe étant disposée au droit de la face de freinage du corps d'entrainement, une partie de ladite face radiale de la jupe formant la face de freinage du bâti.

### Brève description des figures

[Fig. 1] est une vue latérale schématique d'un siège d'un aéronef selon l'invention.
[Fig. 2] est une vue en perspective éclatée d'un premier mode de réalisation d'un dispositif de transmission du siège illustré sur la figure 1.
[Fig. 3] est une section axiale du dispositif de transmission illustré sur la figure 2, lorsque le dispositif de transmission est dans une position au repos.
[Fig. 4] est une vue en perspective éclatée d'un deuxième mode de réalisation d'un dispositif de transmission du siège illustré sur la figure 1.
[Fig. 5] une section axiale du deuxième mode de réalisation du dispositif de transmission lorsque le dispositif de transmission est dans une position au repos.

### Description détaillée de l'invention

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

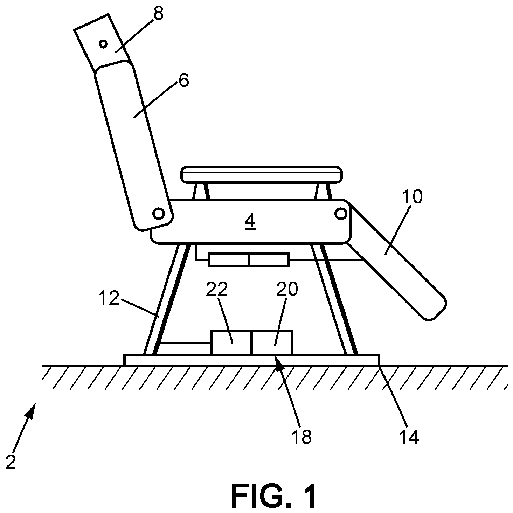

En référence à la figure 1, un exemple de siège d'aéronef 2 selon la présente invention est représenté. Il comporte une assise 4, un dossier 6 monté pivotant par rapport à l'assise 4, un appui-tête 8 monté pivotant par rapport au dossier 6, un repose jambes 10, des pieds 12 et des glissières 14 fixées au sol. Les pieds 12 du siège sont propres à coulisser dans les glissières 14 pour déplacer le siège 2 en avant ou en arrière. Le siège 2 comporte un système d'entrainement 18 électrique dédié au déplacement du siège 2 dans les glissières. Le système d'entrainement 18 comprend, par exemple, un actionneur 20, un dispositif de transmission 22 du mouvement généré par l'actionneur et des pièces mécaniques adaptées pour transmettre le mouvement aux pieds 12 du siège. Ces pièces mécaniques comportent par exemple des pignonneries, des bielles, une crémaillère etc. Elles n'ont pas été représentées sur les figures.

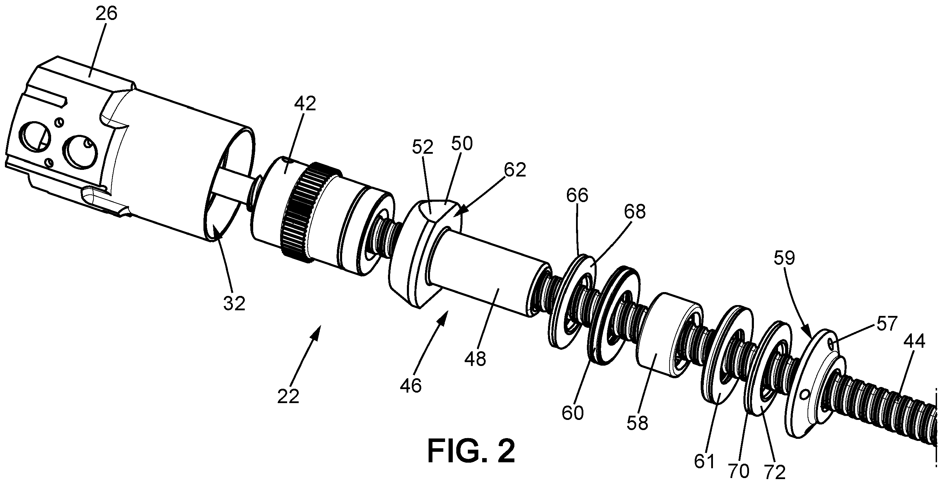

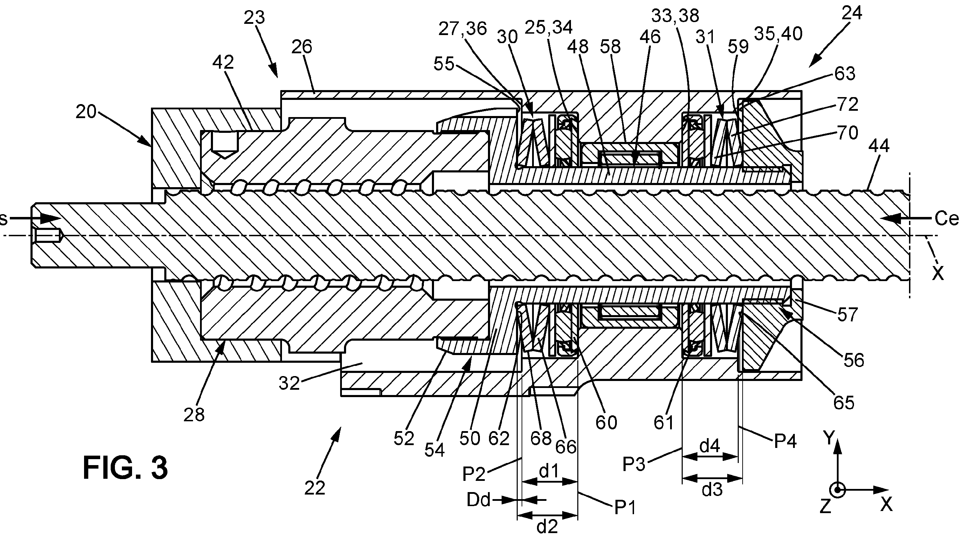

La présente demande de brevet est décrite en référence à un repère orthogonal (O, x, y, z) représenté sur les figures 2 et 3. Dans ce repère, la direction axiale est défini par la direction x, le plan radial est défini par le repère (y, z).

Dans la présente demande de brevet, le terme « entrée 23 » désigne le côté du dispositif de transmission recevant le mouvement d'entrainement et situé du côté de l'actionneur 20. Le terme « sortie 24» désigne le côté du dispositif de transmission transmettant le mouvement d'entrainement et situé du côté des pieds 12 du siège.

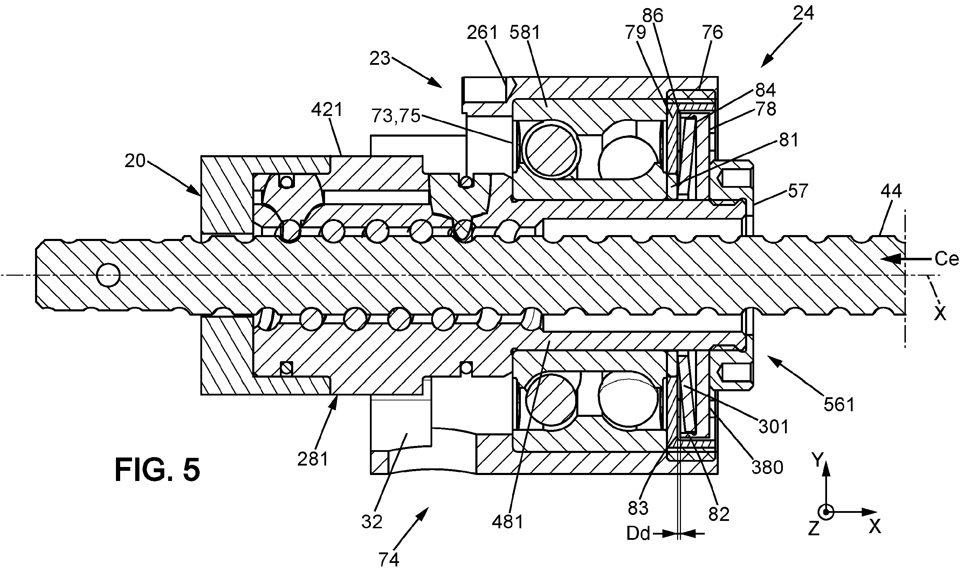

En référence aux figures 3 et 5, le dispositif de transmission 22 selon un premier mode de réalisation comprend un bâti 26 comportant un alésage traversant 32 s'étendant selon une direction axiale x, un corps d'entrainement 28 agencé dans l'alésage 32 du bâti et un premier 30 et un deuxième 31 éléments élastiques logés dans l'alésage 32 du bâti.

Le bâti 26 est muni, du côté entrée 23, d'un premier épaulement interne 25 et d'un premier épaulement périphérique 27 disposés dans l'alésage 32. Le premier épaulement interne 25 présente une première face d'appui 34 contenue dans un premier plan radial P1. Le premier épaulement périphérique 27 présente une première face de freinage 36 contenue dans un deuxième plan radial P2. Le deuxième plan radial P2 est disposé à une distance d1 du premier plan radial P1 selon la direction axiale. Le premier plan radial P1 est parallèle au deuxième plan radial P2. Le premier épaulement périphérique 27 est disposé à l'extérieur et autour du premier épaulement interne 25. Le vecteur normal à la première face d'appui 34 est dirigé en direction de l'entrée 23, ou autrement dit, selon la direction - x du repère (O, x, y, z) illustré sur la figure 3.

Le bâti 26 est également pourvu, du côté sortie 24, d'un deuxième épaulement interne 33 et d'un deuxième épaulement périphérique 35. Le deuxième épaulement interne 33 présente une deuxième face d'appui 38 contenue dans un troisième plan radial P3. Le deuxième épaulement périphérique 35 présente une deuxième face de freinage 40. La deuxième face de freinage 40 est contenue dans un quatrième plan radial P4 disposé à une distance d3 du troisième plan radial P3 selon la direction axiale. Le quatrième plan radial P4 est parallèle au troisième plan radial P3, au deuxième plan radial P2 et au premier plan radial P1. Le deuxième épaulement périphérique 35 est situé autour du deuxième épaulement interne 33. Le vecteur normal à la deuxième face d'appui 38 est dirigé en direction de la sortie 24, ou autrement dit, selon la direction x du repère (O, x, y, z) illustré sur la figure 3.

Le corps d'entrainement 28 est libre en translation selon au moins la direction axiale (x) par rapport au bâti 26.

Le corps d'entrainement 28 comporte un écrou vis à billes 42 apte à être entrainé en rotation par un actionneur 20 (ou un pignon d'entrainement) autour d'un axe s'étendant selon la direction axiale, une vis à billes 44 entrainée en translation selon la direction axiale par l'écrou vis à billes 42, et manchon 46 de support et de freinage propre à être solidarisé à l'écrou vis à billes 42.

Le manchon 46 de support et de freinage comporte une enveloppe cylindrique 48 ayant une première extrémité 54 située du côté entrée 23 et une deuxième extrémité 56 libre située du côté sortie 24. La face externe de la deuxième extrémité 56 de l'enveloppe cylindrique est filetée. L'enveloppe cylindrique 48 s'étend dans le prolongement de l'écrou vis à billes 42. L'enveloppe cylindrique 48 est portée par le bâti 26. Elle est libre en rotation et libre en translation par rapport au bâti 26. Elle loge une partie de la vis à billes 44.

Le manchon 46 de support et de freinage comprend en outre une paroi radiale 50 s'étendant autour de la première extrémité 54 de l'enveloppe cylindrique et une couronne 52 s'étendant axialement à partir de la paroi radiale 50.

La paroi radiale 50 est solidaire de l'enveloppe cylindrique. Elle s'étend vers l'extérieur et forme une collerette. La paroi radiale 50 s'étend au droit de la première face d'appui 34 du bâti et d'au moins une partie de la première face de freinage 36 du bâti. L'extrémité d'une face de la paroi radiale forme une première face de freinage 55 du corps d'entrainement. Cette première face de freinage 55 du corps d'entrainement est située en regard de la première face de freinage 36 du bâti. Une partie de cette face radiale de la paroi radiale 50 située au droit de l'épaulement interne 34 forme la première face d'appui 62 du corps d'entrainement.

La couronne 52 est propre à être fixée à l'écrou vis à billes 42. A cet effet, la face interne de la couronne 52 et la face externe de l'écrou vis à billes 42 sont pourvues de moyens de fixation complémentaires tels que, par exemple, un filetage et un taraudage.

Le manchon 46 de support et de freinage comporte en outre un écrou de fermeture 57 fixé à la deuxième extrémité 56 de l'enveloppe cylindrique, par exemple par vissage. L'écrou de fermeture 57 présente une section axiale de forme triangulaire. Il est vissé sur la deuxième extrémité 56 de l'enveloppe cylindrique. L'écrou de fermeture 57 est vissé de manière à pré-contraindre les éléments élastiques 30, 31. L'écrou de fermeture 57 mets les éléments élastiques 30, 31 en précharge. Ils sont serrés de manière à régler un seuil de détente à un effort donné. Cet effort donné est appelé charge seuil dans la suite de la description. L'écrou de fermeture constitue une paroi radiale 59. Une face radiale de l'écrou de fermeture est disposée en regard de la deuxième face d'appui 38 du bâti. Une partie de cette face radiale forme une deuxième face d'appui 65 du corps d'entrainement. Une autre partie de cette face radiale située en regard de la deuxième face de freinage 40 du bâti constitue la deuxième face de freinage 63 du corps d'entrainement.

Avantageusement, le dispositif de transmission 22 comporte au moins un roulement agencé entre le bâti 26 et le corps d'entrainement 28.

Dans le mode de réalisation représenté, le dispositif de transmission 22 comporte un premier roulement 60 agencé dans l'alésage 32 entre la première face d'appui 34 du bâti et l'élément élastique 30. Le dispositif de transmission 22 comporte également un deuxième roulement 61 agencé dans l'alésage 32 entre la deuxième face d'appui 38 du bâti et l'élément élastique 31. De préférence, le dispositif de transmission 22 comporte un troisième roulement cylindrique creux 58 disposé dans l'alésage 32 entre la première face d'appui 34 du bâti et la deuxième face d'appui 38 du bâti.

Le premier roulement 60 et le deuxième roulement 61 sont, par exemple, constitués par des butées à aiguilles. Le troisième roulement cylindrique 58 est, par exemple, constitué par une cage à aiguilles.

Le premier élément élastique 30 est propre à agir entre la première face d'appui 34 du bâti et la première face d'appui 62 du corps d'entrainement. En particulier, dans le mode de réalisation représenté, le premier élément élastique 30 est disposé entre la première face d'appui 34 du bâti et la première face d'appui 62 du corps d'entrainement.

Le deuxième élément élastique 31 est propre à agir entre la deuxième face d'appui 38 du bâti et la deuxième face d'appui 65 du corps d'entrainement. En particulier, dans le mode de réalisation représenté, le deuxième élément élastique 31 est disposé entre la deuxième face d'appui 38 du bâti et la deuxième face d'appui 65 du corps d'entrainement.

Lorsque le premier élément élastique 30 est au repos, la première face d'appui 62 du corps d'entrainement s'étend à une distance axiale d2 de la première face d'appui 34 du bâti. La distance axiale d2 est égale à la hauteur du premier élément élastique 30 au repos additionnée de la largeur axiale du premier roulement 60.

De la même façon, lorsque le deuxième élément élastique 31 est au repos, la deuxième face d'appui 65 du corps d'entrainement s'étend à une distance axiale d4 de la deuxième face d'appui 38 du bâti. La distance axiale d4 est égale à la hauteur du deuxième élément élastique 31 au repos additionnée de la largeur axiale du deuxième roulement 61.

Dans le mode de réalisation représenté, le premier élément élastique 30 comporte deux rondelles ressorts, par exemple de type rondelles de Belleville 66, 68, montées en opposition autour de l'enveloppe cylindrique 48. La partie centrale (partie surélevée) d'une rondelle ressort 68 est en appui contre la paroi radiale 50. La partie centrale (partie surélevée) de l'autre rondelle ressort 66 est en appui contre le premier roulement 60.

De la même façon, le deuxième élément élastique 31 comporte deux rondelles ressorts, par exemple de type rondelles de Belleville 70, 72, montées en opposition autour de l'enveloppe cylindrique 48. La partie centrale (partie surélevée) d'une rondelle ressort 72 est en appui contre la paroi radiale 59. La partie centrale (partie surélevée) de l'autre rondelle ressort 70 est en appui contre le deuxième roulement 61.

Le premier 30 et le deuxième 31 éléments élastiques présentent chacun une raideur déterminée en fonction d'une charge seuil à partir de laquelle l'utilisateur souhaite que le dispositif de transmission 22 freine ou stoppe le mouvement de la vis à billes 44.

En variante, le premier élément élastique 30 est constitué par une unique rondelle de Belleville et le deuxième élément élastique 30 est constitué par une unique rondelle de Belleville.

En variante, le premier 30 et le deuxième 31 éléments élastiques comportent des ressorts de compression, des lames ressorts, etc.

En variante, le premier élément élastique 30 et le deuxième élément élastique 31 sont différents l'un de l'autre. En particulier, ils peuvent présenter des coefficients de raideur différents l'un de l'autre.

En variante, l'écrou vis à billes 42 et le manchon 46 de support et de freinage sont formés d'une seule pièce.

En variante, les distances d1 et d3 et/ou les distances d2, d4 sont différentes l'une de l'autre. En fonctionnement, le corps d'entrainement 28 est mobile en rotation par rapport au bâti 26 fixe. L'actionneur 20 entraine en rotation l'écrou vis à billes 42 et le corps d'entrainement 28 solidaire de l'écrou vis à billes 42. L'écrou vis à billes 42 entraine en translation la vis à bille 44. Le corps d'entrainement 28 est mobile en rotation par rapport au bâti 26 fixe.

Lorsque une charge axiale Cs est appliquée à la vis à billes 44 selon une direction dirigée vers la sortie 24, le premier élément élastique 30 se comprime. La charge axiale Cs présente une direction opposée au vecteur normal à la première face d'appui 34 du bâti (direction x sur le repère illustré sur la figure 3). La charge axiale Cs est extérieure au dispositif de transmission 22. Elle est supérieure à une charge seuil. Le premier élément élastique 30 se comprime d'une distance axiale au moins égale à la différence entre la distance d2 et la distance d1. La différence entre la distance d2 et la distance d1 forme une distance définie Dd. La première face de freinage 55 du corps d'entrainement vient en contact de la première face de freinage 36 du bâti. La première face de freinage 55 du corps d'entrainement frotte contre la première face de freinage 36 du bâti et freine de ce fait la rotation du corps d'entrainement 28.

De la même façon, lorsqu'une charge axiale Ce est appliquée à la vis à billes 44 selon une direction dirigée vers l'entrée 23, le deuxième élément élastique 31 se comprime. La charge axiale Ce présente une direction opposée au vecteur normal à la deuxième face d'appui 38 du bâti (direction -x sur le repère illustré sur la figure 3). La charge axiale Ce est extérieure au dispositif de transmission 22. Elle est supérieure à une charge seuil. Le deuxième élément élastique 31 se comprime d'une distance axiale au moins égale à la différence entre la distance d4 et la distance d3. La deuxième face de freinage 63 du corps d'entrainement vient en contact de la deuxième face de freinage 40 du bâti. La deuxième face de freinage 63 frotte contre la deuxième face de freinage 40 du bâti et freine de ce fait la rotation du corps d'entrainement 28.

Ainsi, en cas d'application de charges brutales correspondants à une situation d'arrêt d'urgence ou à des situations de personnes s'asseyant de manière brutale, le manchon 46 de support et de freinage frotte contre le bâti 26 et absorbe une partie du choc, protégeant ainsi la chaine cinématique du siège. Le dispositif de transmission 22 est propre à freiner l'entrainement de la vis à billes 44 quel que soit le sens de la charge extérieure appliquée au dispositif de transmission.

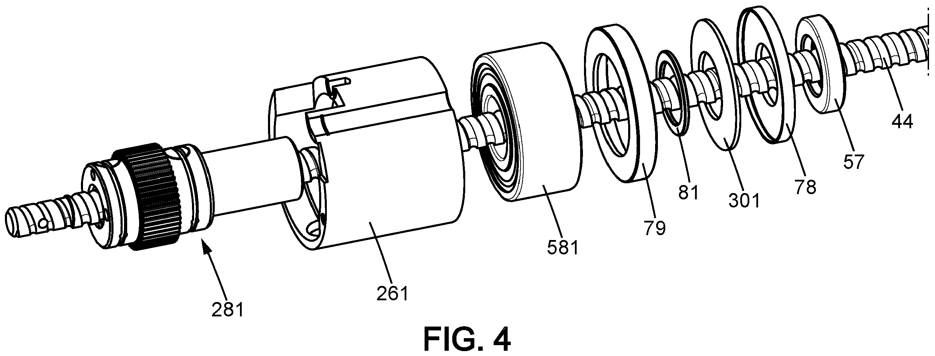

L'invention concerne également un siège d'aéronef 2 comportant un dispositif de transmission 74 selon un deuxième mode réalisation de l'invention. Ce dispositif de transmission 74 est similaire au dispositif de transmission 22 selon le premier mode de réalisation à l'exception du fait qu'il est propre à freiner l'entrainement de la vis-à-billes uniquement lorsque des charges ayant une direction donnée sont appliquées au dispositif. Les figures 4 et 5 représentent un exemple d'un tel dispositif de transmission 74 propre à freiner l'entrainement uniquement lorsque pour des charges Ce dirigées vers l'entrée (direction -x par rapport au repère (O,x,y,z).

Les éléments du dispositif de transmission 74 selon le deuxième mode de réalisation identiques ou similaires aux éléments du dispositif de transmission 22 selon le premier mode de réalisation portent les mêmes références et ne sont pas décrits une seconde fois.

Le dispositif de transmission 74 comporte un bâti 261 et un corps d'entrainement 281. Le bâti 261 comprend un épaulement interne 73 situé dans l'alésage 32. L'épaulement interne 73 forme une face d'appui 75 qui s'étend radialement par rapport à la direction axiale x. Le corps d'entrainement 281 comporte un écrou vis à billes 421 qui se prolonge axialement par une enveloppe cylindrique 481 logeant une partie de la vis à billes 44.

Le dispositif de transmission 74 comporte en outre un roulement 581 et une rondelle d'appui 81 agencés dans l'alésage 32 autour de l'enveloppe cylindrique 481. Le roulement 581 comporte une bague extérieure en appui contre la face d'appui 75 et une bague intérieure. La bague intérieure étant propre à tourner avec le corps d'entrainement 281. La rondelle d'appui 81 est en appui contre la bague intérieure du roulement.

Le dispositif de transmission 74 comporte en outre une bague de freinage 76 propre à être solidarisée au bâti. La bague de freinage 76 comporte une jupe 79 s'étendant radialement vers l'intérieur jusqu'à la rondelle d'appui 81. La jupe 79 est en appui contre la tranche de la rondelle d'appui 81 et s'étend dans le prolongement de celle-ci. Une partie de la face radiale de la jupe 79 forme la face de freinage 83 du bâti. Dans le mode de réalisation représenté, la bague de freinage 76 est vissée dans l'alésage 32 du bâti 261. A cet effet, la bague de freinage 76 comprend un filetage externe et l'alésage est muni d'un taraudage interne.

Le dispositif de transmission 74 comporte de plus un élément élastique 301, un anneau de support 78 et un écrou de fermeture 57 fixé à l'extrémité libre 561 de l'enveloppe cylindrique 481, par exemple par vissage.

L'anneau de support 78 est monté en force autour de l'enveloppe cylindrique 481. L'anneau de support 78 est entrainé en rotation par le corps d'entrainement. L'anneau de support 78 s'étend radialement autour de la direction axiale x. Il forme une paroi radiale 380. L'élément élastique 301 est en appui contre une face radiale de l'anneau de support 78. Cette face radiale est une face d'appui 84 du corps d'entrainement.

L'anneau de support 78 est muni d'un rebord périphérique 82. Le rebord périphérique 82 s'étend axialement vers la jupe 79 de la bague de freinage. La face d'extrémité du rebord périphérique forme une face de freinage 86 du corps d'entrainement. La face de freinage 86 du corps d'entrainement s'étend au droit de la face de freinage du bâti.

L'élément élastique 301 est agencé dans le logement formé par l'anneau de support 78 et le rebord périphérique 82. La hauteur de l'élément élastique 301 au repos est supérieure à la longueur axiale du rebord 82 de sorte que la face de freinage 86 du corps d'entrainement est agencé à une distance définie Dd de la face de freinage du bâti lorsque l'élément élastique 301 est au repos.

L'élément élastique 301 est par exemple, constitué par une rondelle ressort de type rondelle de Belleville. La partie centrale (partie surélevée) de l'élément élastique 301 est disposée en appui contre la rondelle d'appui 81. La bordure périphérique de l'élément élastique 301 en appui contre le rebord périphérique 82.

Le degré vissage de l'écrou de fermeture 57 sur l'extrémité libre 561 de l'enveloppe cylindrique 481 permet de régler le seuil de déclenchement de l'aplatissement de l'élément élastique 301.

En variante, l'élément élastique 301 comprend deux rondelles ressorts montées en opposition par exemple deux rondelles de Belleville.

En fonctionnement, l'écrou vis à billes 421 est entrainée en rotation par l'actionneur 20 pour entrainer en translation la vis à billes 44. L'écrou de fermeture 57, l'anneau de support 78, l'élément élastique 301, la rondelle d'appui 81 et la bague intérieure du roulement 581 sont entrainés en rotation.

Lorsqu'une charge axiale Ce supérieure à une charge seuil est appliquée à la vis à billes 44, l'élément élastique 301 s'aplatie. La face de freinage 86 du corps d'entrainement vient en contact de la face de freinage 83 du bâti. La face de freinage du corps d'entrainement frotte contre la face de freinage 83 du bâti et ralentie ou stoppe la rotation de l'écrou vis à billes. En variante, l'invention concerne également des dispositifs propres à freiner l'entrainement uniquement lorsque pour des charges des charges Cs dirigée vers la sortie (direction -x par rapport au repère (O,x,y,z).

## Revendications

1. Siège d'aéronef (2) comprenant au moins un actionneur (20) apte à générer un mouvement et au moins un dispositif de transmission (22, 74) du mouvement comportant :
- un bâti (26; 261) pourvu d'un alésage (32) traversant s'étendant selon une direction axiale (x),
- un corps d'entrainement (28 ; 281) propre à être entrainé en rotation par rapport au bâti (26 ;261) autour d'un axe s'étendant selon une direction axiale (x); ledit corps d'entrainement (28; 281) étant agencé dans l'alésage (32), libre en translation selon au moins la direction axiale (x) par rapport au bâti (26; 261),
**caractérisé en ce que** ledit bâti (26; 261) comprend au moins une face d'appui (34, 38; 75) et au moins une face de freinage (36, 40; 83), ledit corps d'entrainement (28; 281) comprenant au moins une face d'appui (62, 65 ; 84) s'étendant au droit de la face d'appui (34, 38 ; 75) du bâti et au moins une face de freinage (55, 63 ;86) s'étendant au droit d'au moins une partie de la face de freinage (36, 40; 83) du bâti,
- au moins un élément élastique (30, 31; 301) agencé entre ladite au moins une face d'appui (34,38 ;75) du bâti et ladite au moins une face d'appui (62,65 ; 84) du corps d'entrainement pour maintenir ladite au moins une face de freinage (55,63 ; 86) du corps d'entrainement à une distance définie (Dd) de ladite au moins une face de freinage (36,40 ;83) du bâti, ledit au moins un élément élastique (30, 31; 301) ayant une raideur déterminée et étant précontraint de sorte que, lorsqu'une charge axiale (Ce, Cs) supérieure à une charge seuil est appliquée au corps d'entrainement (28; 281), ledit élément élastique (30, 31; 301) se comprime et ladite au moins une face de freinage (55, 63 ; 86) du corps d'entrainement vient en contact de ladite au moins une face de freinage (36,40 ; 83) du bâti.

2. Siège d'aéronef (2) selon la revendication 1, dans lequel ledit élément élastique (30, 31 ; 301) comporte au moins une rondelle ressort.

3. Siège d'aéronef (2) selon la revendication 1, dans lequel ledit élément élastique (30, 31 ; 301) comporte deux rondelles de Belleville (66, 68, 70,72) montées en opposition.

4. Siège d'aéronef (2) selon l'une quelconque des revendications 1 à 3, dans lequel dispositif de transmission (22) comporte au moins un roulement (60, 61) agencé entre la face d'appui (34,38 ; 75) du bâti et ledit au moins un élément élastique (30, 31 ; 301).

5. Siège d'aéronef (2) selon l'une quelconque des revendications 1 à 4, dans lequel le corps d'entrainement (28 ; 281) comporte :
- un écrou vis à billes (42),
- une vis à billes (44) propre à être entrainée en translation par l'écrou vis à billes (42),
- une enveloppe cylindrique (48) s'étendant dans le prolongement de l'écrou vis à billes (42), ladite enveloppe cylindrique (48 ;481) comportant une première extrémité (54) solidaire de l'écrou vis à billes (42) et une deuxième extrémité libre (56), et
- une paroi radiale (50, 59 ; 380) solidaire d'au moins une extrémité (54, 56) de l'enveloppe cylindrique (48), ladite au moins une face de freinage (55,63 ; 86), et ladite au moins une face d'appui (62,65 ; 83) du corps d'entrainement étant disposées sur ladite paroi radiale (50,59 ; 380).

6. Siège d'aéronef (2) selon la revendication 5, qui comporte un écrou de fermeture (57) propre à être solidarisé à la deuxième extrémité (56) de l'enveloppe cylindrique ; l'écrou de fermeture étant propre à pré-contraindre ledit au moins un élément élastique (30, 31 ; 301).

7. Siège d'aéronef (2) selon la revendication 6, et dans lequel la face de freinage (63) et la face d'appui (65) du corps d'entrainement sont disposée sur une face radiale dudit écrou de fermeture (57).

8. Siège d'aéronef (2) selon l'une quelconque des revendications 5 à 7, dans lequel l'enveloppe cylindrique (48) comporte une couronne (52) s'étendant axialement à partir de l'extrémité de la paroi radiale (50), ladite couronne (52) étant propre à être fixée à l'écrou vis à billes (42).

9. Siège d'aéronef (2) selon l'une quelconque des revendications 1 à 8, dans lequel le bâti (26) comprend au moins un épaulement interne (25,33) contenu dans un premier plan radial (P1, P3) et au moins un épaulement périphérique (27,35) disposé autour dudit au moins un épaulement interne (25,33) et contenu dans un second plan radial (P2, P4) ; ledit second plan radial (P2, P4) étant décalé axialement par rapport au premier plan radial (P1, P3), et dans lequel ladite au moins une face d'appui (34, 38) du bâti est formé par ledit au moins un épaulement interne (25,33) et ladite au moins une face de freinage (36, 40) du bâti est formé par ledit au moins un épaulement périphérique(27,35).

10. Siège d'aéronef (2) selon l'une quelconque des revendications 5 et 6, dans lequel le dispositif de transmission (74) comporte un anneau de support (78) agencé autour de l'enveloppe cylindrique (481), l'anneau de support (78) formant la paroi radiale (380), la face d'appui (84) du corps d'entrainement étant une face radiale dudit anneau de support (78).

11. Siège d'aéronef (2) selon la revendication 10, dans lequel ledit anneau de support (78) est muni d'un rebord périphérique (82) s'étendant axialement, la face d'extrémité du rebord périphérique forme la face de freinage (86) du corps d'entrainement.

12. Siège d'aéronef (2) selon l'une quelconque des revendications 5, 6, 10 et 11, dans lequel le bâti (261) comporte une face d'appui (75) s'étendant radialement et dans lequel dispositif de transmission (74) comporte un roulement (581) et une rondelle d'appui (81) agencés dans l'alésage (32) autour du corps d'entrainement (281) ; le roulement ayant une bague interne et une bague externe ; la bague externe du roulement (581) étant en appui contre la face d'appui (75) du bâti, la rondelle d'appui (81) étant en appui contre la bague interne du roulement (581).

13. Siège d'aéronef (2) selon la revendication 11 ou 12, dans lequel le dispositif de transmission (74) comporte en outre une bague de freinage (76) pourvue d'une jupe (79) s'étendant radialement vers l'intérieur, une face radiale de ladite jupe étant disposée au droit de la face de freinage (86) du corps d'entrainement, une partie de ladite face radiale de la jupe formant la face de freinage (83) du bâti.

## Patentansprüche

1. Luftfahrzeugsitz (2) mit zumindest einem Stellglied (20), das eine Bewegung erzeugen kann, und zumindest einer Übertragungsvorrichtung (22, 74) zur Übertragung der Bewegung, enthaltend:
- einen Rahmen (26; 261), der mit einer Durchgangsbohrung (32) versehen ist, die sich entlang einer axialen Richtung (x) erstreckt,
- einen Antriebskörper (28; 281), der dazu geeignet ist, in Bezug auf den Rahmen (26; 261) um eine Achse in Drehung versetzt zu werden, die sich entlang einer axialen Richtung (x) erstreckt; wobei der Antriebskörper (28; 281) in Bezug auf den Rahmen (26; 261) entlang zumindest der axialen Richtung (X) frei verschiebbar in der Bohrung (32) angeordnet ist,
**dadurch gekennzeichnet, dass** der Rahmen (26; 261) zumindest eine Auflagefläche (34, 38; 75) und zumindest eine Bremsfläche (36, 40; 83) umfasst, wobei der Antriebskörper (28; 281) zumindest eine Auflagefläche (62, 65; 84), die sich im Bereich der Auflagefläche (34, 38; 75) des Rahmens erstreckt, und zumindest eine Bremsfläche (55, 63; 86), die sich im Bereich zumindest eines Teils der Bremsfläche (36, 40; 83) des Rahmens erstreckt, umfasst,
- zumindest ein Federelement (30, 31; 301), das zwischen der zumindest einen Auflagefläche (34, 38; 75) des Rahmens und der zumindest einen Auflagefläche (62, 65; 84) des Antriebskörpers angeordnet ist, um die zumindest eine Bremsfläche (55, 63; 86) des Antriebskörpers in einem definierten Abstand (Dd) von der zumindest einen Bremsfläche (36, 40; 83) des Rahmens zu halten, wobei das zumindest eine Federelement (30, 31; 301) eine bestimmte Steifigkeit aufweist und so vorgespannt ist, dass dann, wenn eine axiale Last (Ce, Cs), die größer als eine Schwellenlast ist, auf den Antriebskörper (28; 281) ausgeübt wird, das Federelement (30, 31; 301) zusammengedrückt wird und die zumindest eine Bremsfläche (55, 63; 86) des Antriebskörpers mit der zumindest einen Bremsfläche (36, 40; 83) des Rahmens in Kontakt gelangt.

2. Luftfahrzeugsitz (2) nach Anspruch 1,
wobei das Federelement (30, 31; 301) zumindest eine Federscheibe umfasst.

3. Luftfahrzeugsitz (2) nach Anspruch 1,
wobei das Federelement (30, 31; 301) zwei gegenüberliegend gelagerte Tellerfedern (66, 68, 70, 72) aufweist.

4. Luftfahrzeugsitz (2) nach einem der Ansprüche 1 bis 3,
wobei die Übertragungsvorrichtung (22) zumindest ein Lager (60, 61) aufweist, das zwischen der Auflagefläche (34, 38; 75) des Rahmens und dem zumindest einen Federelement (30, 31; 301) angeordnet ist.

5. Luftfahrzeugsitz (2) nach einem der Ansprüche 1 bis 4,
wobei der Antriebskörper (28; 281) enthält:
- eine Kugelumlaufspindelmutter (42),
- eine Kugelumlaufspindel (44), die dazu geeignet ist, über die Kugelumlaufspindelmutter (42) translatorisch angetrieben zu werden,
- eine zylindrische Hülle (48), die sich in der Verlängerung der Kugelumlaufspindelmutter (42) erstreckt, wobei die zylindrische Hülle (48; 481) ein erstes Ende (54), das fest mit der Kugelumlaufspindelmutter (42) verbunden ist, und ein freies zweites Ende (56) aufweist, und
- eine radiale Wand (50, 59; 380), die mit zumindest einem Ende (54, 56) der zylindrischen Hülle (48) fest verbunden ist, wobei die zumindest eine Bremsfläche (55, 63; 86) und die zumindest eine Auflagefläche (62, 65; 83) des Antriebskörpers an der radialen Wand (50, 59; 380) angeordnet sind.

6. Luftfahrzeugsitz (2) nach Anspruch 5,
enthaltend eine Verschlussmutter (57), die dazu geeignet ist, fest mit dem zweiten Ende (56) der zylindrischen Hülle verbunden zu werden; wobei die Verschlussmutter dazu geeignet ist, das zumindest eine Federelement (30, 31; 301) vorzuspannen.

7. Luftfahrzeugsitz (2) nach Anspruch 6,
wobei die Bremsfläche (63) und die Auflagefläche (65) des Antriebskörpers auf einer radialen Fläche der Verschlussmutter (57) angeordnet sind.

8. Luftfahrzeugsitz (2) nach einem der Ansprüche 5 bis 7,
wobei die zylindrische Hülle (48) einen Kranz (52) aufweist, der sich axial vom Ende der radialen Wand (50) aus erstreckt, wobei der Kranz (52) dazu geeignet ist, an die Kugelumlaufspindelmutter (42) befestigt zu werden.

9. Luftfahrzeugsitz (2) nach einem der Ansprüche 1 bis 8,
wobei der Rahmen (26) zumindest eine Innenschulter (25, 33), die in einer ersten radialen Ebene (P1, P3) enthalten ist, und zumindest eine Umfangsschulter (27, 35) umfasst, die um die zumindest eine Innenschulter (25, 33) herum angeordnet ist und in einer zweiten radialen Ebene (P2, P4) enthalten ist; wobei die zweite radiale Ebene (P2, P4) gegenüber der ersten radialen Ebene (P1, P3) axial versetzt ist, und wobei die zumindest eine Auflagefläche (34, 38) des Rahmens aus der zumindest einen Innenschulter (25, 33) gebildet ist und die zumindest eine Bremsfläche (36, 40) des Rahmens aus der zumindest einen Umfangsschulter (27, 35) gebildet ist.

10. Luftfahrzeugsitz (2) nach einem der Ansprüche 5 und 6,
wobei die Übertragungsvorrichtung (74) einen Stützring (78) aufweist, der um die zylindrische Hülle (481) herum angeordnet ist, wobei der Stützring (78) die radiale Wand (380) bildet, wobei die Auflagefläche (84) des Antriebskörpers eine radiale Fläche des Stützrings (78) ist.

11. Luftfahrzeugsitz (2) nach Anspruch 10,
wobei der Stützring (78) mit einem sich axial erstreckenden Umfangsflansch (82) versehen ist, wobei die Endfläche des Umfangsflansches die Bremsfläche (86) des Antriebskörpers bildet.

12. Luftfahrzeugsitz (2) nach einem der Ansprüche 5, 6, 10 und 11,
wobei der Rahmen (261) eine sich radial erstreckende Auflagefläche (75) aufweist und wobei die Übertragungsvorrichtung (74) ein Lager (581) und eine Auflagescheibe (81) aufweist, die in der Bohrung (32) um den Antriebskörper (281) herum angeordnet sind; wobei das Lager einen Innenring und einen Außenring aufweist; wobei der Außenring des Lagers (581) an der Auflagefläche (75) des Rahmens anliegt, wobei die Auflagescheibe (81) an dem Innenring des Lagers (581) anliegt.

13. Luftfahrzeugsitz (2) nach Anspruch 11 oder 12,
wobei die Übertragungsvorrichtung (74) ferner einen Bremsring (76) umfasst, der mit einer sich radial nach innen erstreckenden Schürze (79) versehen ist, wobei eine radiale Fläche der Schürze im Bereich der Bremsfläche (86) des Antriebskörpers angeordnet ist und ein Teil der radialen Fläche der Schürze die Bremsfläche (83) des Rahmens bildet.

## Claims

1. An aircraft seat (2) comprising at least one actuator (20) capable of generating a movement and at least one movement transmission device (22, 74) including:
- a frame (26; 261) provided with a through bore (32) extending in an axial direction (x),
- a drive body (28; 281) adapted to be rotated relative to the frame (26; 261) about an axis extending in an axial direction (x); said drive body (28; 281) being arranged in the bore (32), free in translation in at least the axial direction (x) relative to the frame (26; 261), **characterised in that** said frame (26; 261) comprises at least one abutment face (34, 38; 75) and at least one braking face (36, 40; 83), said drive body (28; 281) comprising at least one abutment face (62, 65; 84) extending in line with the abutment face (34, 38; 75) of the frame and at least one braking face (55, 63; 86) extending in line with at least part of the braking face (36, 40; 83) of the frame,
- at least one elastic element (30, 31; 301) arranged between said at least one abutment face (34, 38; 75) of the frame and said at least one abutment face (62, 65; 84) of the drive body to maintain said at least one braking face (55, 63; 86) of the drive body at a defined distance (Dd) from said at least one braking face (36, 40; 83) of the frame, said at least one elastic element (30, 31; 301) having a determined stiffness and being pre-stressed so that, when an axial load (Ce, Cs) greater than a threshold load is applied to the drive body (28; 281), said elastic element (30, 31; 301) compresses and said at least one braking face (55, 63; 86) of the drive body contacts said at least one braking face (36, 40; 83) of the frame.

2. The aircraft seat (2) according to claim 1, wherein said elastic element (30, 31; 301) includes at least one spring washer.

3. The aircraft seat (2) according to claim 1, wherein said elastic element (30, 31; 301) includes two Belleville washers (66, 68, 70, 72) mounted opposite each other.

4. The aircraft seat (2) according to any one of claims 1 to 3, wherein the transmission device (22) includes at least one bearing (60, 61) arranged between the abutment face (34, 38; 75) of the frame and said at least one elastic element (30, 31; 301).

5. The aircraft seat (2) according to any one of claims 1 to 4, wherein the drive body (28; 281) includes:
- a ball screw nut (42),
- a ball screw (44) adapted to be translated by the ball screw nut (42),
- a cylindrical casing (48) extending in the extension of the ball screw nut (42), said cylindrical casing (48; 481) including a first end (54) integral with the ball screw nut (42) and a second free end (56), and
- a radial wall (50, 59; 380) integral with at least one end (54, 56) of the cylindrical casing (48), said at least one braking face (55, 63; 86), and said at least one abutment face (62, 65; 83) of the drive body being disposed on said radial wall (50, 59; 380).

6. The aircraft seat (2) according to claim 5, which includes a closing nut (57) adapted to be integral with the second end (56) of the cylindrical casing; the closure nut being suitable for pre-stressing said at least one elastic element (30, 31; 301).

7. The aircraft seat (2) according to claim 6, and wherein the braking face (63) and the abutment face (65) of the drive body are disposed on a radial face of said closing nut (57).

8. The aircraft seat (2) according to any one of claims 5 to 7, wherein the cylindrical casing (48) includes a crown (52) extending axially from the end of the radial wall (50), said crown (52) being adapted to be fastened to the ball screw nut (42).

9. The aircraft seat (2) according to any one of claims 1 to 8, wherein the frame (26) comprises at least one internal shoulder (25, 33) contained in a first radial plane (P1, P3) and at least one peripheral shoulder (27, 35) disposed around said at least one internal shoulder (25, 33) and contained in a second radial plane (P2, P4); said second radial plane (P2, P4) being offset axially relative to the first radial plane (P1, P3), and wherein said at least one abutment face (34, 38) of the frame is formed by said at least one internal shoulder (25, 33) and said at least one braking face (36, 40) of the frame is formed by said at least one peripheral shoulder (27, 35).

10. The aircraft seat (2) according to any one of claims 5 and 6, wherein the transmission device (74) includes a support ring (78) arranged around the cylindrical casing (481), the support ring (78) forming the radial wall (380), the abutment face (84) of the drive body being a radial face of said support ring (78).

11. The aircraft seat (2) according to claim 10, wherein said support ring (78) is provided with an axially extending peripheral flange (82), the end face of the peripheral flange forms the braking face (86) of the drive body.

12. The aircraft seat (2) according to any one of claims 5, 6, 10 and 11, wherein the frame (261) includes an abutment face (75) extending radially and wherein the transmission device (74) includes a bearing (581) and an abutment washer (81) arranged in the bore (32) around the drive body (281); the bearing having an internal ring and an external ring; the external ring of the bearing (581) resting against the abutment face (75) of the frame, the abutment washer (81) being resting against the internal ring of the bearing (581).

13. The aircraft seat (2) according to claim 11 or 12, wherein the transmission device (74) further includes a braking ring (76) provided with a skirt (79) extending radially inwards, a radial face of said skirt being disposed in line with the braking face (86) of the drive body, a part of said radial face of the skirt forming the braking face (83) of the frame.
